# FASCICULE DE BREVET EUROPEEN

(11) **EP 3 215 403 B1**
(45) Date de publication et mention de la délivrance du brevet: **12.12.2018**
(21) Numéro de dépôt: 15791685.9
(22) Date de dépôt: 06.10.2015
(51) Int. Cl.: B60R 16/04, B60K 1/04

(54) **DISPOSITIF DE MAINTIEN D'UN BAC DE STOCKEUR ELECTRIQUE A BORD D'UN VEHICULE AUTOMOBILE**
VORRICHTUNG ZUR AUFRECHTERHALTUNG EINES ENERGIESPEICHERFACHES AN BORD EINES KRAFTFAHRZEUGS
DEVICE FOR MAINTAINING AN ELECTRIC POWER STORAGE TRAY ON-BOARD A MOTOR VEHICLE

(30) Priorité: 05.11.2014 FR 1460657
(43) Date de publication de la demande: 13.09.2017
(73) Titulaire: PSA Automobiles SA, 78300 Poissy (FR)
(72) Inventeur: BOURDIN, Loic, F-95870 Bezons (FR); CHALVET, Manuel, F-75015 Paris (FR)
(86) Numéro de dépôt international: PCT/FR2015/052675
(87) Numéro de publication internationale: WO 2016/071593

(56) Documents cités:
- WO-A1-2012/104721
- DE-A1- 3 141 164
- GB-A- 2 401 587
- US-B1- 6 224 998

## Description

Le domaine de l'invention concerne un dispositif de maintien du bac d'un stockeur électrique sur une cale pour un véhicule automobile.

Un véhicule automobile est conçu pour absorber efficacement l'énergie cinétique lors d'un choc. Lors d'un choc frontal à grande vitesse, il est prévu de comprimer le bloc avant, de transmettre les efforts aux endroits prévus de la structure et d'éviter les pics d'accélération qui sont sources de lésions internes des occupants du véhicule.

Dans une architecture classique de véhicule automobile, le groupe motopropulseur constitué du moteur de traction et de la boite de vitesses est fixé à un brancard. Le brancard est la structure du véhicule formant l'ossature. Le brancard peut être formé d'une ou plusieurs pièces de structure dont l'assemblage forme une structure rigide portant le véhicule. Une cale sert de pièce de liaison entre le groupe motopropulseur et le brancard.

Lors d'un choc, la cale et le stockeur électrique du véhicule subissent une accélération importante provoquant la déconnexion des câbles électriques du stockeur électrique, voire son éjection du véhicule lorsque le stockeur électrique est monté à l'avant du véhicule en dehors de l'habitacle.

Il est connu de monter le stockeur électrique à l'avant du véhicule sur la cale présente sur la partie gauche du véhicule (en référentiel du conducteur) dans un bac qui est fixé à la fois sur le brancard et sur la cale.

On connaît également de l'état de la technique la demande internationale WO2012104721A1 décrivant une cale portant un stockeur électrique directement fixée sur le brancard du véhicule et agencée de sorte à déplacer le stockeur électrique en cas de choc selon une direction voulue pour protéger le système de commande électrique du véhicule. On notera que le stockeur électrique est fixé sur la cale au moyen d'une pièce rigide en forme d'étriller.

On connaît également le brevet français FR2918615B1 décrivant un dispositif de retenue d'un stockeur électrique. Le dispositif prévoit un câble en acier s'étendant près de la face arrière du stockeur électrique transversalement à l'axe longitudinal du véhicule entre deux points de liaison rigide, un situé sur le moteur et un autre sur le brancard. Ce câble permet de retenir le stockeur électrique en cas de choc frontal afin d'éviter une éjection du stockeur dans l'habitacle du véhicule.

Ces solutions améliorent incontestablement la sécurité des passagers en cas d'éjection du stockeur électrique. Cependant, dans chacune des solutions il est autorisé un déplacement du stockeur électrique par rapport à l'ossature du véhicule pouvant aboutir à la déconnexion des câbles électriques et entrainant une interruption de l'alimentation des équipements électriques. Ceci n'est pas acceptable car les portes du véhicule se retrouveraient bloquées et empêcheraient à un passager de s'extraire du véhicule suite à un choc.

Par ailleurs, il y a un besoin que les portes puissent être déverrouillées de l'extérieur suite au choc afin que les secours puissent ouvrir les portes, notamment lors d'un accident si le conducteur perd connaissance. Ainsi, les secours peuvent ouvrir les portes de l'extérieur si le système de contrôle a déverrouillé les portes correctement. Cela évite de casser les vitres et le risque de blesser les personnes à l'intérieur du véhicule.

Il existe donc un besoin d'améliorer le maintien du stockeur électrique lorsqu'il est positionné sous la carrosserie à l'avant du véhicule pour empêcher la déconnexion des câbles électriques et son éjection suite à un choc frontal.

Plus précisément, l'invention concerne un dispositif selon la revendication 1.

Selon l'invention, le panneau inférieur comprend deux passages et le dispositif de maintien du bac comprend en outre une sangle s'étendant à l'intérieur du bac et traversant de part et d'autre le panneau inférieur par les passages de sorte à ceinturer la cale sur sa partie inférieure et maintenir le panneau inférieur serré à la cale en cas de choc du véhicule.

De préférence, le panneau inférieur du bac est fixé à la partie supérieure de la cale au moyen d'au moins deux premiers points de fixation rigide répartis longitudinalement sur le panneau et les passages sont positionnés de sorte à étendre la sangle sensiblement d'un premier point de fixation à l'autre premier point.

En outre, la sangle est en contact permanent avec la surface intérieure du panneau inférieur du bac.

De plus, la sangle est maintenue tendue de façon permanente lors du roulage du véhicule.

Préférentiellement, le panneau inférieur du bac est fixé uniquement à la cale.

Selon une variante, la cale est également fixée à un support du groupe motopropulseur du véhicule.

Selon une variante, la cale est fixée au brancard sur une partie latérale du véhicule.

Selon une variante, la cale est fixée au brancard par des deuxièmes points de fixation rigide positionnés sur une partie latérale de la cale et la sangle est positionnée de sorte à entourer les deuxièmes points de fixation rigide.

Selon une variante, le dispositif de maintien comprend également un tendeur pour serrer la sangle.

Il est prévu selon l'invention, un véhicule automobile comprenant un stockeur électrique monté dans un bac et comprenant également un dispositif de maintien du bac conforme à l'une quelconque des variantes décrites précédemment.

Grâce à l'invention, le stockeur électrique est maintenu dans son bac réceptacle. Le dispositif de maintien garantit le maintien du stockeur même en cas de rupture des points de fixation rigide du bac à la cale.

L'invention évite une déconnexion des câbles électriques et améliore ainsi la sécurité des passagers.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
La figure 1 représente un schéma simplifié du dispositif de maintien du bac du stockeur électrique et son positionnement par rapport au groupe motopropulseur et du brancard.
La figure 2 est une vue en trois dimensions du bac du stockeur électrique monté sur la cale.
Les figure 3A, 3B et 3C représentent trois vues en deux dimensions du dispositif de maintien du bac du stockeur électrique sur la cale, la figure 3A représentant une vue de face, la figure 3B une vue de dessus et la figure 3C une vue latérale.

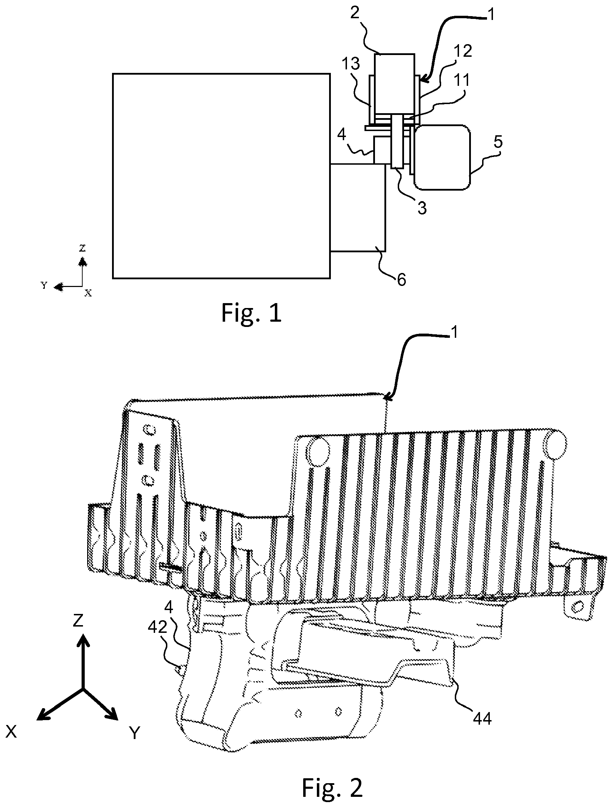

L'invention propose un dispositif de maintien du bac du stockeur électrique d'un véhicule pour éviter la déconnexion des câbles électriques lors d'un choc frontal. La figure 1 représente un schéma d'un mode de réalisation du dispositif de maintien à bord du véhicule. Le support 6 du groupe motopropulseur est fixé rigidement à une cale 4. Le groupe motopropulseur est constitué d'au moins un moteur de traction (thermique, électrique ou hydraulique) et d'une boite de vitesse, l'ensemble étant monté sur le support 6. La cale 4 est une cale gauche frontale du véhicule. On considère que le conducteur est le référentiel pour la désignation des équipements gauche et droit du véhicule.

Dans une variante, la cale 4 n'est pas fixée directement au support 6 du groupe motopropulseur. De plus, la cale peut être positionnée dans une autre zone du véhicule, par exemple à droite.

Par ailleurs, la cale 4 est fixée rigidement à un brancard 5 du véhicule. Le véhicule peut comprendre un ou plusieurs brancards formant l'ossature du véhicule. Le brancard 5 est une pièce de support du véhicule sur laquelle les équipements sont fixés. La cale 4 est fixée sur le brancard 5 sur sa partie latérale au moyen de points de fixation rigide.

En outre, sur sa partie supérieure la cale 4 comprend d'autres points de fixation rigide pour fixer un bac 1 accueillant un stockeur électrique 2.

On définit la partie supérieure de la cale la partie orientée vers le haut du véhicule et la partie inférieure la partie orientée vers le bas du véhicule.

Dans ce mode de réalisation, le bac 1 comprend des panneaux 11, 12, 13 formant un volume à l'intérieur duquel est monté le stockeur électrique 2. Le bac 1 est une pièce intermédiaire liant la cale 4 et le stockeur électrique 2. Des moyens de fixation du stockeur dans le bac, non représentés sur les figures, permettent de retenir le stockeur électrique 2 dans le bac 1.

On notera que le bac 1 comprend un panneau inférieur 11 sous le stockeur électrique 2, lequel est fixé à la partie supérieure de la cale 4 par des points de fixation rigide. Le bac 1 comprend en outre des panneaux latéraux 12 et 13 en contact avec les parois latérales du stockeur électrique. Les panneaux peuvent être des éléments assemblés ou peuvent former une pièce unique. Les panneaux latéraux 12 et 13 peuvent être de dimension réduite formant alors des butées. Le panneau inférieur 11 couvre la surface de la partie inférieure du stockeur électrique 2.

En outre, selon l'invention le dispositif de maintien du bac 1 sur la partie supérieure de la cale 4 comprend une sangle 3 traversant le panneau inférieur, passant à l'intérieur du bac 1 et ceinturant la cale 4 sur sa partie inférieure. Ainsi, le bac 1 est maintenu fixé sur la cale 4, laquelle est fixée rigidement au brancard 5. De cette façon, le bac 1 et le stockeur électrique ne se déplacent pas au regard du brancard 5 lors d'un choc. On évite ainsi la déconnexion des câbles électriques qui sont également solidaires de l'ossature du véhicule. La sangle 3 améliore la rigidité de l'ensemble formé par le bac 1 et la cale 4.

On notera que le bac 1 est de préférence fixé uniquement à la cale 4 sur sa partie supérieure. L'utilisation de la sangle 3 permet de réduire le nombre de points de fixation du bac 1. Dans ce mode de réalisation, il n'est pas prévu de fixation au brancard 5, facilitant le montage et réduisant les pièces mécaniques de fixation du bac 1. L'encombrement du dispositif de maintien du bac est réduit, ainsi que le coût de l'ossature. Il peut être toutefois prévu de fixer le bac 1 également au brancard 5 pour augmenter la rigidité de l'ensemble formé par le bac 1, la cale 4 et le brancard 5.

La figure 2 représente une vue en trois dimensions du bac 1 et de la cale 4. Le stockeur électrique 2, le brancard 5 et le support 6 du groupe motopropulseur ne sont pas représentés. Les points de fixation rigide 42 de la cale 4 au brancard sont représentés sur la face cachée de la vue tridimensionnelle. Les points de fixation rigide 42 sont répartis sur la surface latérale de la cale 4. La cale 4 a un corps globalement parallélépipédique et les points de fixation rigide 42 sont positionnés sur une face latérale longitudinale. Dans cet exemple ils sont au nombre de quatre. Les points de fixation 42 permettent une fixation rigide empêchant le mouvement de la cale 4 par rapport au brancard 5, et même en cas de choc du véhicule.

En outre, la cale 4 comprend une partie rigide 44 sur l'autre face latérale longitudinale fixée au support du groupe motopropulseur. La partie rigide 44 est elle-même liée au corps de la cale 4 par un élastomère amortissant. L'élastomère permet de réduire la transmission des vibrations générées par le groupe motopropulseur au brancard 5.

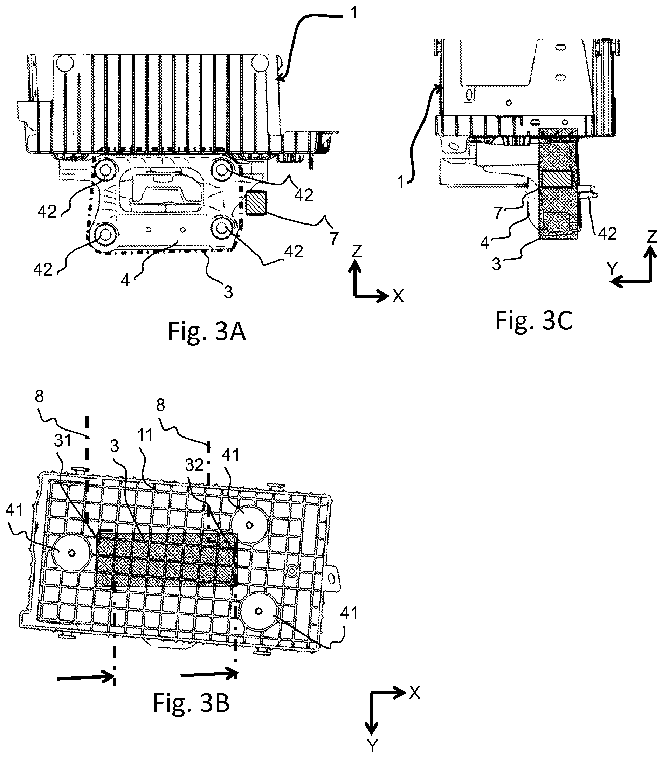

Les figures 3A, 3B et 3C représentent trois vues en deux dimensions du dispositif de maintien du bac 1 du stockeur électrique. La figure 3A est la vue de face orientée sur la face latérale longitudinale ayant les points de fixation rigide 42 de la cale 4. Les points de fixation 42 sont répartis sur les zones angulaires du corps de la cale 4. L'espace central du corps de la cale 4 est prévu pour accueillir l'élastomère amortissant et la partie rigide fixée au support du groupe motopropulseur. Le bac 1 du stockeur électrique est monté sur la partie supérieure de la cale 4. La sangle 3 forme un bandeau entourant le corps de la cale 4, traversant le panneau inférieur 11 du bac 1 par des passages et passant à l'intérieur du bac 1.

La sangle 3 est une bande souple formée par exemple d'un matériau métallique ou de nylon. Le matériau choisi est prévu pour empêcher une déformation élastique de la sangle lors d'un choc. La sangle 3 présente une largeur assurant un serrage rigide du panneau inférieur 11 contre la cale 4.

La sangle 3 entoure le corps de la cale 4 et donc les points de fixation rigide 42 de la face latérale longitudinale. La sangle 3 est en contact avec la partie inférieure de la cale 4 et les parties latérales entre les deux faces longitudinales de la cale 4. Sur la partie supérieure, la sangle 3 est en contact avec la surface intérieur du bac 1, la surface extérieure du panneau inférieur 11 est en contact avec la partie supérieure de la cale 4.

La figure 3B représente la vue de face supérieure. Le panneau inférieur 11 du bac 1 est fixé à la partie supérieure de la cale au moyen de trois points de fixation rigide 41 répartis longitudinalement sur le panneau 11. Les points de fixation assurent le maintien du bac 1 sur la cale 4. Cependant, lors d'un choc, il arrive que le panneau inférieur 11 se fragilise et se rompt entre les points de fixation 41 sur deux lignes de rupture 8, représentées en pointillées sur la figure 3B (les flèches représentent les efforts exercés sur le bac 1 par un choc du véhicule). Ces ruptures peuvent provoquer un déplacement du stockeur électrique et la déconnexion des câbles électriques, voire l'éjection du stockeur électrique du véhicule.

Par ailleurs, le panneau inférieur 11 comprend deux passages 31 et 32 permettant à la sangle 3 de traverser de part et d'autre le panneau inférieur 11. Les passages 31, 32 sont positionnés de sorte à étendre la sangle 3 sensiblement d'un point de fixation 41 positionné d'un côté de la longueur du panneau inférieur à un autre point de fixation 41 positionné de l'autre côté de la longueur du panneau inférieur.

De plus, la sangle 3 est en contact permanent avec la surface intérieure du panneau inférieur 11 du bac 1, et celle-ci est maintenue tendue de façon permanente lors du roulage du véhicule, avant et après un choc du véhicule.

Le premier passage 31 et le deuxième passage 32 sont positionnés à hauteur des points de fixation 41 de sorte que les lignes de rupture identifiées 8 soient couvertes par la sangle 3. Ainsi, en cas de rupture du panneau 11, la sangle 3 assure le maintien du bac 1 sur la cale 4, empêchant la déconnexion des câbles électriques.

La figure 3C représente la vue latérale du dispositif de maintien du bac 1 sur une largeur. La sangle 3 s'étend sur la hauteur du corps de la cale 4 ainsi que sur sa partie inférieure. Elle s'étend également à l'intérieur du bac 1 via les passages 31 et 32. Le positionnement de la sangle 3 est agencé pour que celle-ci entoure les points de fixation rigide 42 fixant la cale 4 au brancard 5. Cet agencement permet de maintenir rigide l'ensemble formé par le bac, la cale et le brancard, évitant une déconnexion des câbles électriques en cas de choc. Les points de fixation rigide 42 sont dimensionnés pour résister à une déformation ou rupture entre la cale et le brancard en cas de choc.

En outre, le dispositif de maintien du bac 1 comprend préférentiellement, mais non obligatoirement, un tendeur 7 de la sangle 3 avec des moyens de réglages de la tension. Cela peut être par exemple un axe autour duquel la sangle 3 s'entoure, un moyen de réglage par des vis ou une vis avec une rondelle traversant la sangle 3 et venant se fixer dans la cale 4.

On notera que la largeur de la sangle 3 est préférentiellement sensiblement égale à la largeur du corps de la cale 4. On entend par sensiblement le fait qu'elle puisse être inférieure de quelques millimètres à quelques centimètres à la largeur du corps de la cale 4.

Par ailleurs, il peut être prévu des moyens de maintien de la sangle 3 sur le corps de la cale 4, non représentés sur les figures 3A, 3B et 3C. Ils peuvent être par exemple montés sur la partie inférieure de la cale 4. Dans une autre variante, la sangle est maintenue autour de la cale 4 par serrage et ne nécessite pas de points de fixation rigide liant la cale 4 et la sangle 3.

L'invention s'applique aux véhicules automobiles et aux dispositifs de maintien d'un bac de stockeur électrique. Le dispositif de maintien renforce les points de fixation usuellement utilisés pour fixer un panneau au moyen d'une sangle renforçant la rigidité. Il assure la connectivité des câbles électriques garantissant ainsi l'opérabilité des fonctions électroniques de sécurité même en cas de choc.

## Revendications

1. Dispositif de maintien d'un bac (1) d'un stockeur électrique (2) sur une cale (4) pour un véhicule automobile, ledit dispositif comprenant ledit bac (1), ladite cale (4) et un brancard (5) du véhicule, le bac (1) comprenant un panneau inférieur (11) fixé sur la cale (4) au niveau de sa partie supérieure, la cale (4) étant également fixée au brancard (5) du véhicule, le panneau inférieur (11) comprenant deux passages (31, 32) et le dispositif de maintien du bac comprenant en outre une sangle (3) s'étendant à l'intérieur du bac (1) et traversant de part et d'autre le panneau inférieur (11) par les passages (31, 32) de sorte à ceinturer la cale (4) sur sa partie inférieure et maintenir le panneau inférieur (11) serré à la cale (4) en cas de choc du véhicule.

2. Dispositif selon la revendication 1, **caractérisé en ce que** le panneau inférieur (11) du bac (1) est fixé à la partie supérieure de la cale au moyen d'au moins deux premiers points de fixation rigide (41) répartis longitudinalement sur le panneau (11) et **en ce que** les passages (31, 32) sont positionnés de sorte à étendre la sangle (3) sensiblement d'un premier point de fixation à l'autre premier point.

3. Dispositif selon l'une quelconque des revendications 1 à 2, **caractérisé en ce que** la sangle (3) est en contact permanent avec la surface intérieure du panneau inférieur (11) du bac (1).

4. Dispositif selon l'une quelconque des revendications 1 à 3, **caractérisé en ce que** la sangle (3) est maintenue tendue de façon permanente lors du roulage du véhicule.

5. Dispositif selon l'une quelconque des revendications 1 à 4, **caractérisé en ce que** le panneau inférieur (11) du bac est fixé uniquement à la cale (4).

6. Dispositif selon l'une quelconque des revendications 1 à 5, **caractérisé en ce que** la cale (4) est également fixable à un support (6) du groupe motopropulseur du véhicule.

7. Dispositif selon l'une quelconque des revendications 1 à 6, **caractérisé en ce que** la cale (4) est fixée au brancard (5) sur une partie latérale du véhicule.

8. Dispositif selon l'une quelconque des revendications 1 à 7, **caractérisé en ce que** la cale (4) est fixée au brancard (5) par des deuxièmes points de fixation rigide (42) positionnés sur une partie latérale de la cale (4) et **en ce que** la sangle (3) est positionnée de sorte à entourer les deuxièmes points de fixation rigide (42).

9. Dispositif selon l'une quelconque des revendications 1 à 8, **caractérisé en ce qu'**il comprend également un tendeur (7) pour serrer la sangle (3).

10. Véhicule automobile comprenant un stockeur électrique (2) monté dans un bac (1), **caractérisé en ce qu'**il comprend également un dispositif de maintien du bac conforme à l'une quelconque des revendications 1 à 9.

## Patentansprüche

1. Vorrichtung zum Halten eines Fachs (1) eines Stromspeichers (2) auf einer Verkeilung (4) für ein Kraftfahrzeug, wobei die Vorrichtung das Fach (1), die Verkeilung (4) und einen Längsträger (5) des Fahrzeugs umfasst, wobei das Fach (1) eine untere Platte (11) umfasst, die auf der Verkeilung (4) im Bereich ihres oberen Teils befestigt ist, wobei die Verkeilung (4) auch an dem Längsträger (5) des Fahrzeugs befestigt ist, wobei die untere Platte (11) zwei Durchgänge (31, 32) umfasst, und die Haltevorrichtung des Fachs außerdem einen Gurt (3) umfasst, der sich in dem Inneren des Fachs (1) erstreckt und die untere Platte (11) von einer Seite zur anderen durch die Durchgänge (31, 32) derart durchquert, dass die Verkeilung (4) auf ihrem unteren Teil umgurtet ist und die untere Platte (11) bei einem Stoß des Fahrzeugs an die Verkeilung (4) gedrückt wird.

2. Vorrichtung nach Anspruch 1, **dadurch gekennzeichnet, dass** die untere Platte (11) des Fachs (1) an dem oberen Teil der Verkeilung mittels mindestens zwei ersten Punkten zur starren Befestigung (41), die längs auf der Platte (11) verteilt sind, befestigt ist, und dass die Durchgänge (31, 32) derart positioniert sind, dass der Gurt (3) im Wesentlichen von einem ersten Befestigungspunkt zu dem anderen ersten Punkt ausgedehnt ist.

3. Vorrichtung nach einem der Ansprüche 1 bis 2, **dadurch gekennzeichnet, dass** der Gurt (3) in ständiger Berührung mit der inneren Oberfläche der unteren Platte (11) des Fachs (1) ist.

4. Vorrichtung nach einem der Ansprüche 1 bis 3, **dadurch gekennzeichnet, dass** der Gurt (3) beim Fahren des Fahrzeugs ständig gespannt gehalten wird.

5. Vorrichtung nach einem der Ansprüche 1 bis 4, **dadurch gekennzeichnet, dass** die untere Platte (11) des Fachs nur an der Verkeilung (4) befestigt ist.

6. Vorrichtung nach einem der Ansprüche 1 bis 5, **dadurch gekennzeichnet, dass** die Verkeilung (4) auch an einem Träger (6) des Antriebsaggregats des Fahrzeugs befestigt ist.

7. Vorrichtung nach einem der Ansprüche 1 bis 6, **dadurch gekennzeichnet, dass** die Verkeilung (4) an dem Längsträger (5) auf einem seitlichen Teil des Fahrzeugs befestigt ist.

8. Vorrichtung nach einem der Ansprüche 1 bis 7, **dadurch gekennzeichnet, dass** die Verkeilung (4) an dem Längsträger (5) durch zweite Punkte zur starren Befestigung (42) befestigt ist, die auf einem seitlichen Teil der Verkeilung (4) positioniert sind, und dass der Gurt (3) derart positioniert ist, dass er die zweiten Punkte zur starren Befestigung (42) umgibt.

9. Vorrichtung nach einem der Ansprüche 1 bis 8, **dadurch gekennzeichnet, dass** sie auch einen Spanner (7) zum Spannen des Gurts (3) umfasst.

10. Kraftfahrzeug, das einen Stromspeicher (2) umfasst, der in einem Fach (1) montiert ist, **dadurch gekennzeichnet, dass** es auch eine Haltevorrichtung des Fachs gemäß einem der Ansprüche 1 bis 9 umfasst.

## Claims

1. A device for maintaining a tray (1) for electric power storage (2) on a shim (4) for a motor vehicle, said device including said tray (1), said shim (4) and a side member (5) of the vehicle, the tray (1) including a lower panel (11) fixed on the shim (4) at the level of its upper part, the shim (4) being likewise fixed to the side member (5) of the vehicle, the lower panel (11) including two passages (31, 32) and the device for maintaining the tray further including a strap (3) extending in the interior of the tray (1) and traversing on either side the lower panel (11) by the passages (31, 32) so as to surround the shim (4) on its lower part and to keep the lower panel (11) held tight to the shim (4) in the event of an impact of the vehicle.

2. The device according to claim 1, **characterized in that** the lower panel (11) of the tray (1) is fixed to the upper part of the shim by means of at least two first rigid attachment points (41) distributed longitudinally on the panel (11) and **in that** the passages (31, 32) are positioned so as to extend the strap (3) substantially from a first attachment point to the other first point.

3. The device according to any one of claims 1 to 2, **characterized in that** the strap (3) is in permanent contact with the interior surface of the lower panel (11) of the tray (1).

4. The device according to any one of claims 1 to 3, **characterized in that** the strap (3) is held taut in a permanent manner during the travel of the vehicle.

5. The device according to any one of claims 1 to 4, **characterized in that** the lower panel (11) of the tray is fixed solely to the shim (4).

6. The device according to any one of claims 1 to 5, **characterized in that** the shim (4) is also able to be fixed to a support (6) of the powertrain of the vehicle.

7. The device according to any one of claims 1 to 6, **characterized in that** the shim (4) is fixed to the side member (5) on a lateral part of the vehicle.

8. The device according to any one of claims 1 to 7, **characterized in that** the shim (4) is fixed to the side member (5) by second rigid attachment points (42) positioned on a lateral part of the shim (4) and **in that** the strap (3) is positioned so as to surround the second rigid attachment points (42).

9. The device according to any one of claims 1 to 8, **characterized in that** it also includes a tensioner (7) for tightening the strap (3).

10. A motor vehicle including an electric power storage (2) mounted in a tray (1), **characterized in that** it also includes a device for maintaining the tray according to any one of claims 1 to 9.
